# EUROPEAN PATENT APPLICATION

(11) **EP 4 782 092 A1**
(43) Date of publication of application: **29.07.2026**
(21) Application number: 24916955.8
(22) Date of filing: 27.12.2024
(51) Int. Cl.: B01D 53/26, C25B 1/04, C25B 9/00, C25B 9/19, C25B 15/00, C25B 15/02, C25B 15/08

(54) **OPERATION METHOD FOR DEHUMIDIFIER DEVICE, CONTROL DEVICE FOR DEHUMIDIFIER DEVICE, DEHUMIDIFIER DEVICE, AND HYDROGEN PRODUCTION FACILITY**

(30) Priority: 12.01.2024 JP 2024003251
(71) Applicant: Mitsubishi Heavy Industries, Ltd., Chiyoda-ku Tokyo 100-8332 (JP)
(72) Inventor: KURODA, Takuji, Tokyo 100-8332 (JP); TAMURA, Ken, Tokyo 100-8332 (JP); ICHINOSE, Hikaru, Tokyo 100-8332 (JP)
(74) Representative: Studio Torta S.p.A.
(86) International application number: PCT/JP2024/046312
(87) International publication number: WO 2025/150454

(57) **Abstract**

An operation method for a dehumidification apparatus for dehumidifying hydrogen gas produced by a hydrogen production apparatus, the dehumidification apparatus including a dehumidifier for removing moisture contained in the hydrogen gas, a discharge line for discharging the hydrogen gas dehumidified by the dehumidifier from the dehumidifier, a dew point measurement line connected to the discharge line, a dew point meter disposed in the dew point measurement line, and an inlet valve and an outlet valve disposed on both sides of the dew point meter in the dew point measurement line, the operation method including a stopping step of stopping discharging of the hydrogen gas from the dehumidifier to the discharge line, and a maintaining step of maintaining a state in which a dew point meter installation part of the dew point measurement line including at least an installation position of the dew point meter is filled with a dry gas when the discharging of the hydrogen gas from the dehumidifier to the discharge line is stopped.

## Description

### TECHNICAL FIELD

The present disclosure relates to an operation method for a dehumidification apparatus, a control device for a dehumidification apparatus, a dehumidification apparatus, and hydrogen production equipment.

The present application claims priority based on Japanese Patent Application No. 2024-003251 filed on January 12, 2024, the entire content of which is incorporated herein by reference.

### BACKGROUND ART

In hydrogen production equipment, a dehumidifier is used to remove moisture from hydrogen gas produced by a hydrogen production apparatus such as a water splitting apparatus. In order to confirm the performance of the dehumidifier, the dew point (dew point temperature) of hydrogen gas dehumidified by the dehumidifier may be measured using a dew point meter disposed on the outlet side of the dehumidifier.

Patent Document 1 describes a water electrolysis system (hydrogen production equipment) including a water electrolysis apparatus, a dehumidification apparatus for dehumidifying hydrogen discharged from the water electrolysis apparatus, and a dew point meter for measuring the dew point of hydrogen dehumidified by the dehumidifier.

### Citation List

### Patent Literature

Patent Document 1: JP2014-40637A

### SUMMARY

### Problems to be Solved

The dew point meter has a dew point condition (usage condition) for dehumidified hydrogen. Here, in a state in which dehumidified hydrogen does not flow through the installation position of the dew point meter, such as when the dehumidifier is stopped, the dew point at the installation position of the dew point meter rises due to the intrusion of the atmosphere or the like, and may fall outside the range of the hydrogen usage condition. For this reason, normally, when restarting the dehumidifier, hydrogen gas dehumidified by the dehumidifier is supplied to the installation position of the dew point meter until the dew point at the installation position of the dew point meter falls within the range of the hydrogen usage condition. However, it takes a long time for the dew point of hydrogen at the installation position of the dew point meter to decrease to the dew point range of the hydrogen usage condition and for appropriate dew point measurement to become possible.

In addition, in the hydrogen production equipment, hydrogen may be produced following power fluctuations of renewable energy or the like on the supply side, or hydrogen may be produced according to demand fluctuations on the demand side. In such cases, the frequency of switching between operation and stop of the entire hydrogen production equipment including the dehumidifier increases. In this case, since it takes a long time as described above until the dew point of hydrogen at the installation position of the dew point meter falls within the range of the usage condition each time the hydrogen production equipment is restarted, an increase in this standby time can be a problem.

In view of the above circumstances, an object of at least one embodiment of the present invention is to provide an operation method for a dehumidification apparatus, a control device for a dehumidification apparatus, a dehumidification apparatus, and hydrogen production equipment capable of promptly starting an appropriate dew point measurement when restarting a dehumidifier.

### Solution to the Problems

An operation method for a dehumidification apparatus according to at least one embodiment of the present invention is an operation method for a dehumidification apparatus for dehumidifying hydrogen gas produced by a hydrogen production apparatus,
the dehumidification apparatus including:
   a dehumidifier for removing moisture contained in the hydrogen gas;
   a discharge line for discharging the hydrogen gas dehumidified by the dehumidifier from the dehumidifier;
   a dew point measurement line connected to the discharge line;
   a dew point meter disposed in the dew point measurement line;
   an inlet valve disposed in the dew point measurement line at a position closer to a connection portion with the discharge line than the dew point meter; and
   an outlet valve disposed in the dew point measurement line at a position opposite to the inlet valve across the dew point meter,
the operation method including:
   a stopping step of stopping discharging of the hydrogen gas from the dehumidifier to the discharge line; and
   a maintaining step of maintaining a state in which a dew point meter installation part of the dew point measurement line including at least an installation position of the dew point meter is filled with a dry gas when the discharging of the hydrogen gas from the dehumidifier to the discharge line is stopped.

Further, a control device for a dehumidification apparatus according to at least one embodiment of the present invention is a control device for controlling an operation of a dehumidification apparatus for dehumidifying hydrogen gas produced by a hydrogen production apparatus,
the dehumidification apparatus including:
   a dehumidifier for removing moisture contained in the hydrogen gas;
   a discharge line for discharging the hydrogen gas dehumidified by the dehumidifier from the dehumidifier;
   a dew point measurement line connected to the discharge line;
   a dew point meter disposed in the dew point measurement line;
   an inlet valve disposed in the dew point measurement line at a position closer to a connection portion with the discharge line than the dew point meter; and
   an outlet valve disposed in the dew point measurement line at a position opposite to the inlet valve across the dew point meter,
in which the control device is configured to operate opening and closing of the inlet valve or the outlet valve such that a state in which a dew point meter installation part of the dew point measurement line including at least an installation position of the dew point meter is filled with a dry gas is maintained when discharging of the hydrogen gas from the dehumidifier to the discharge line is stopped.

Further, a dehumidification apparatus according to at least one embodiment of the present invention is a dehumidification apparatus for dehumidifying hydrogen gas produced by a hydrogen production apparatus, including:
a dehumidifier for removing moisture contained in the hydrogen gas;
a discharge line for discharging the hydrogen gas dehumidified by the dehumidifier from the dehumidifier;
a dew point measurement line connected to the discharge line;
a dew point meter disposed in the dew point measurement line;
an inlet valve disposed in the dew point measurement line at a position closer to a connection portion with the discharge line than the dew point meter; and
an outlet valve disposed in the dew point measurement line at a position opposite to the inlet valve across the dew point meter,
in which the dehumidification apparatus is configured such that the hydrogen gas having passed through the outlet valve in the dew point measurement line is released to an atmosphere.

Further, hydrogen production equipment according to at least one embodiment of the present invention includes:
a hydrogen production apparatus; and
the above-described dehumidification apparatus configured to dehumidify hydrogen gas produced by the hydrogen production apparatus.

### Advantageous Effects

At least one embodiment of the present invention provides an operation method for a dehumidification apparatus, a control device for a dehumidification apparatus, a dehumidification apparatus, and hydrogen production equipment capable of promptly starting an appropriate dew point measurement when restarting a dehumidifier.

### BRIEF DESCRIPTION OF DRAWINGS

FIG. 1 is a schematic diagram of hydrogen production equipment according to an embodiment.
FIG. 2 is a schematic diagram of hydrogen production equipment according to an embodiment.
FIG. 3 is a time chart illustrating an example of the open/closed state of valves in a dehumidification apparatus when an operation method according to an embodiment is applied.
FIG. 4 is a time chart illustrating an example of the open/closed state of valves in a dehumidification apparatus when an operation method according to an embodiment is applied.
FIG. 5 is a time chart illustrating an example of the open/closed state of valves in a dehumidification apparatus when an operation method according to an embodiment is applied.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

### (Configuration of hydrogen production equipment)

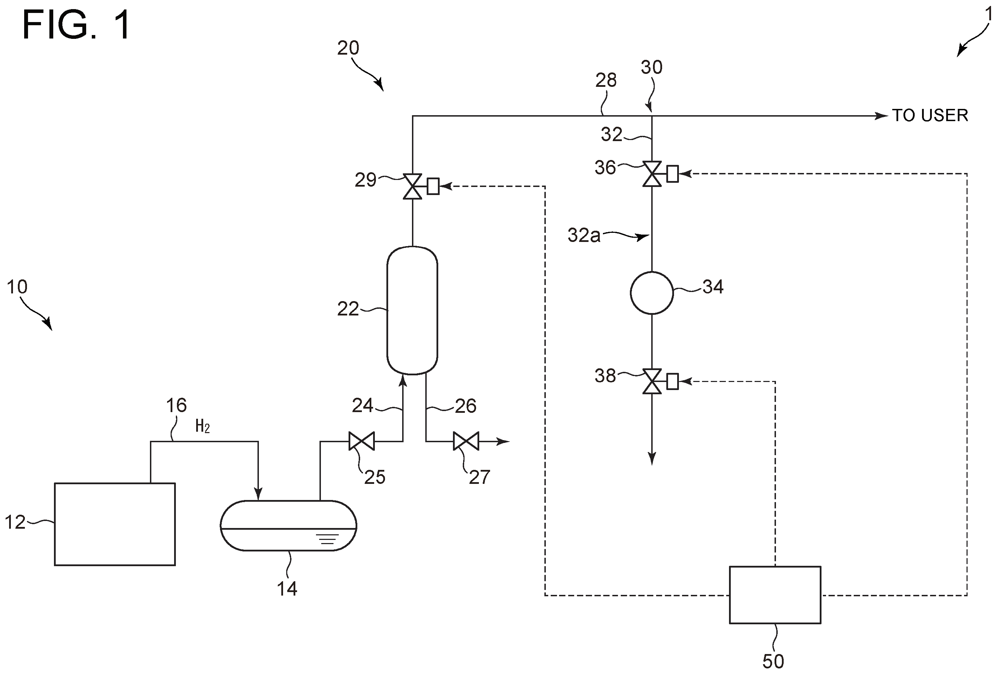

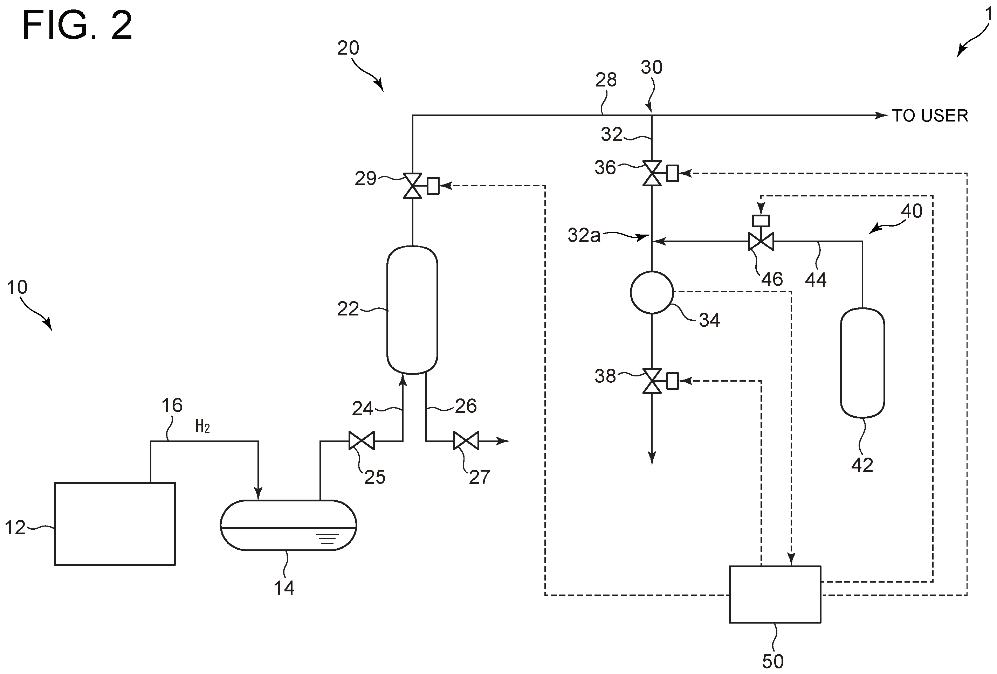

FIGs. 1 and 2 are each a schematic diagram illustrating an example of hydrogen production equipment including a dehumidification apparatus to which an operation method according to an embodiment is applied. As illustrated in FIGs. 1 and 2, the hydrogen production equipment 1 includes a hydrogen production apparatus 10 for producing hydrogen, and a dehumidification apparatus 20 for dehumidifying hydrogen gas produced by the hydrogen production apparatus 10.

The hydrogen production apparatus 10 illustrated in FIGs. 1 and 2 includes a water electrolysis apparatus 12 configured to electrolyze water to produce hydrogen and oxygen, and a gas-liquid separator 14 configured such that hydrogen gas produced by the water electrolysis apparatus 12 is directed thereto.

The water electrolysis apparatus 12 may be, for example, an alkaline water electrolysis apparatus, a polymer electrolyte membrane (PEM) water electrolysis apparatus, an anion exchange membrane (AEM) water electrolysis apparatus, or a solid oxide electrolysis cell (SOEC) water electrolysis apparatus.

The water electrolysis apparatus 12 includes an electrolytic cell for electrolyzing water. Water is supplied to the electrolytic cell. A current is supplied to the electrolytic cell via a rectifier. As a result, a voltage is applied between electrodes disposed in the electrolytic cell, whereby the water in the electrolytic cell is electrolyzed, producing hydrogen on the cathode side and producing oxygen on the anode side. Water in which an electrolyte is dissolved (electrolyte solution) may be supplied into the electrolytic cell, and the water (water constituting the electrolyte solution) may be electrolyzed. The electrolyte may be an alkaline substance such as potassium hydroxide (KOH).

The hydrogen gas generated in the electrolytic cell of the water electrolysis apparatus 12 is discharged from the electrolytic cell accompanied by moisture, and is guided to the gas-liquid separator 14 through a hydrogen line 16. In the gas-liquid separator 14, the hydrogen gas containing moisture is separated into hydrogen gas and water (liquid). The hydrogen gas in the gas phase in the gas-liquid separator 14 contains saturated vapor moisture. This hydrogen gas is discharged from the gas-liquid separator 14 and guided to the dehumidification apparatus 20. The water (electrolyte solution) separated by the gas-liquid separator 14 is returned to the electrolytic cell of the water electrolysis apparatus 12 through a return line (not shown).

The oxygen produced by the water electrolysis apparatus 12 may be discharged from the electrolytic cell through an oxygen line (not shown) and then used by equipment that uses oxygen or released to the outside.

The dehumidification apparatus 20 includes a dehumidifier 22, an introduction line 24 for introducing the hydrogen gas into the dehumidifier 22, and a discharge line 28 for discharging the hydrogen gas from the dehumidifier 22. The introduction line 24 and the discharge line 28 may be respectively provided with an introduction valve 25 and a discharge valve 29.

The dehumidifier 22 may include at least one adsorption tower containing an adsorbent capable of adsorbing moisture. The introduction line 24 is disposed between the hydrogen production apparatus 10 and the dehumidifier 22, and is configured to guide the hydrogen gas (wet hydrogen gas) from the hydrogen production apparatus 10 to the dehumidifier 22. The discharge line 28 is configured to discharge the hydrogen gas (dry hydrogen gas) dehumidified by the dehumidifier 22 from the dehumidifier 22. That is, the hydrogen gas introduced into the dehumidifier 22 through the introduction line 24 is dehumidified by the adsorbent and then discharged from the dehumidifier 22.

The introduction valve 25 may be configured to adjust the inflow amount of the hydrogen gas (wet hydrogen gas) from the gas-liquid separator 14 to the dehumidifier 22. The discharge valve 29 may be configured to adjust the discharge amount of the hydrogen gas (dry hydrogen gas) from the dehumidifier 22.

The dehumidification apparatus 20 may include a vent line 26 connected to the adsorption tower (dehumidifier 22) for releasing the hydrogen gas from the adsorption tower (dehumidifier 22) to the outside, and a vent valve 27 disposed in the vent line 26. The vent line 26 functions as a line for discharging a regeneration gas, which is supplied to regenerate the adsorbent, from the adsorption tower when performing a regeneration process of the adsorbent provided inside the adsorption tower. During the normal operation (during dehumidification) of the hydrogen production equipment 1 and the dehumidification apparatus 20, the vent valve 27 is basically closed.

The hydrogen gas (dehumidified hydrogen gas) discharged from the dehumidifier 22 through the discharge line 28 may be stored in a storage part (tank) or the like, or may be supplied to a hydrogen consumption equipment (user). The hydrogen consumption equipment may include, for example, a hydrogen combustion equipment configured to combust hydrogen (for example, a gas turbine equipment, a steelmaking equipment, etc.), a hydrogen liquefaction equipment configured to liquefy hydrogen, a equipment that generates electricity by a chemical reaction using hydrogen as a fuel (for example, a power generation equipment including a fuel cell such as an SOFC (Solid Oxide Fuel Cell), etc.), a equipment that produces a fuel using hydrogen as a raw material (for example, a fuel synthesis equipment, etc.), or a hydrogen gas station configured to supply hydrogen to equipment.

As illustrated in FIGs. 1 and 2, the dehumidification apparatus 20 further includes a dew point measurement line 32 connected to the discharge line 28, a dew point meter 34 disposed in the dew point measurement line 32, and an inlet valve 36 and an outlet valve 38 disposed in the dew point measurement line 32. The upstream end of the dew point measurement line 32 is connected to the discharge line 28. The inlet valve 36 is disposed in the dew point measurement line 32 at a position closer to a connection portion 30 with the discharge line 28 than the dew point meter 34 (that is, at a position upstream of the dew point meter 34). The outlet valve 38 is disposed in the dew point measurement line 32 at a position opposite to the inlet valve 36 across the dew point meter 34 (that is, at a position downstream of the dew point meter 34).

The dew point meter 34 is configured to measure the dew point of gas in the dew point measurement line 32. During the operation of the hydrogen production apparatus 10 (i.e., during hydrogen production), the hydrogen gas discharged from the dehumidifier 22 flows through the discharge line 28, and a part of the hydrogen gas is directed to the dew point measurement line 32 to be subjected to dew point measurement by the dew point meter 34. Therefore, the dew point measured by the dew point meter 34 during the operation of the hydrogen production apparatus 10 indicates the dew point of the hydrogen gas flowing through the discharge line 28 (the hydrogen gas supplied to the hydrogen consumption equipment or the like).

The type of the dew point meter 34 is not particularly limited. As the dew point meter 34, for example, a capacitance-type dew point meter, a chilled mirror dew point meter, or a quartz crystal microbalance dew point meter can be used.

The hydrogen gas guided to the dew point measurement line 32 is released to the atmosphere through the dew point measurement line 32 after passing through the outlet valve 38. For example, the downstream end of the dew point measurement line 32 may be open to the atmosphere, or equipment (such as piping) to which the downstream end of the dew point measurement line 32 is connected may be open to the atmosphere.

In the exemplary embodiment illustrated in FIG. 2, the dehumidification apparatus 20 includes a dry gas supply part 40 for supplying a dry gas to the dew point measurement line 32. The dry gas supply part 40 includes a dry gas storage part 42 (a gas tank or a gas cylinder, etc.) for storing the dry gas, a supply line 44 disposed between the dry gas storage part 42 and the dew point measurement line 32, and a supply valve 46 disposed in the supply line 44.

The supply line 44 is configured to supply the dry gas to a portion of the dew point measurement line 32 between the inlet valve 36 and the outlet valve 38. As illustrated in FIG. 2, the supply line 44 may be connected to a region of the dew point measurement line 32 between the inlet valve 36 and the dew point meter 34.

The dry gas may be a gas having a dew point equal to or lower than the upper limit value of the measurable range of the dew point meter 34. The dry gas may be a gas having a dew point equal to or higher than the lower limit value and equal to or lower than the upper limit value of the measurable range of the dew point meter 34.

The dry gas may be, for example, a gas having a dew point of 0°C or lower under atmospheric pressure. The dry gas may be, for example, a gas having a dew point of -100°C or higher and 0°C or lower under atmospheric pressure.

The dry gas may include hydrogen or an inert gas such as nitrogen or argon. The dry gas may be hydrogen having a purity of 99.0% or more, or an inert gas such as nitrogen or argon.

As illustrated in FIGs. 1 and 2, the dehumidification apparatus 20 may further include a control device 50 for controlling opening and closing of the inlet valve 36 and the outlet valve 38 disposed in the dew point measurement line 32. The control device 50 may be configured to control opening and closing of the discharge valve 29 of the discharge line 28 through which the hydrogen discharged from the dehumidifier 22 flows. In addition, the control device 50 may be configured to adjust the opening degree of the supply valve 46 (see FIG. 2) disposed in the supply line 44. The inlet valve 36, the outlet valve 38, the discharge valve 29, and/or the supply valve 46 and the control device are electrically connected, and an electric signal indicating an opening/closing command or an opening degree command from the control device may be given to each valve.

As illustrated in FIG. 2, an electric signal indicating the dew point (measured value) measured by the dew point meter 34 may be sent to the control device 50. The control device 50 may be configured to control opening and closing of the inlet valve 36, the outlet valve 38, and/or the supply valve 46 based on the measured value of the dew point meter 34.

The control device 50 includes a computer with a processor (such as CPU), a main storage device (memory device; such as RAM), an auxiliary storage device, an interface, and the like. The control device 50 may be configured to receive the signal from the dew point meter 34 via an interface. The processor is configured to process the signal thus received. Also, the processor is configured to process programs loaded into the main storage device.

The processing contents in the control device 50 may be implemented as programs executed by the processor. The programs may be stored in, for example, the auxiliary storage device. When the programs are executed, these programs are loaded into the main storage device. The processor is configured to read out the programs from the main storage device to execute instructions included in the programs.

### (Operation method for dehumidification apparatus)

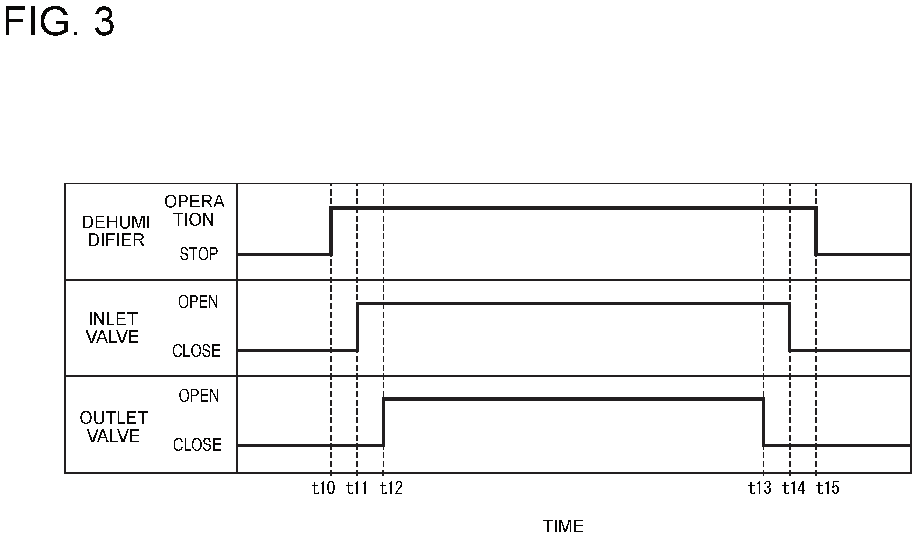

Next, an operation method for the dehumidification apparatus 20 according to some embodiments will be described. FIGs. 3 to 5 are each a time chart illustrating an example of the open/closed state of valves in the dehumidification apparatus 20 when the operation method according to an embodiment is applied. t10 to t36 in FIGs. 3 to 5 indicate respective times.

In the operation method for the dehumidification apparatus described below, the opening and closing or the opening degree adjustment of the inlet valve 36, the outlet valve 38, the supply valve 46, and/or the discharge valve 29 may be performed using the above-described control device 50, or may be performed manually.

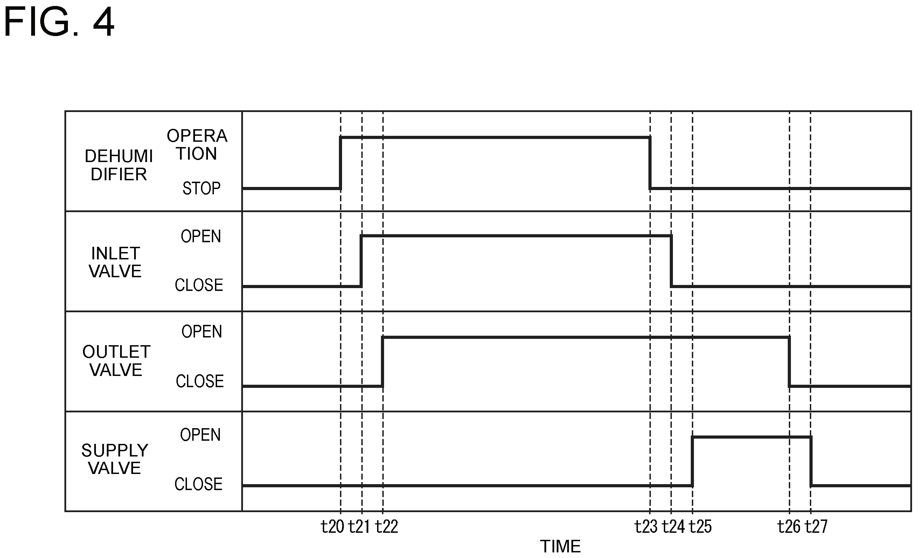

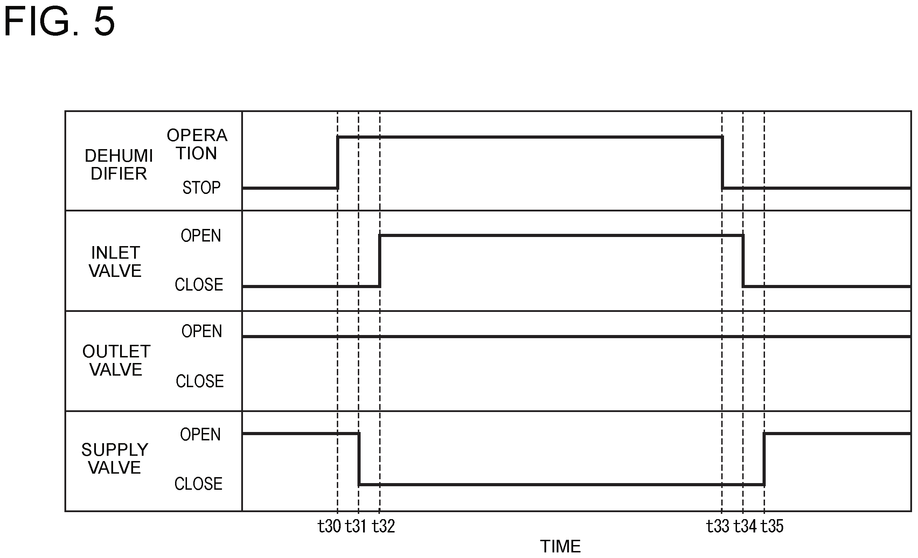

The operation method for the dehumidification apparatus 20 according to some embodiments is applied when stopping the dehumidification apparatus 20 in operation. During the normal operation of the dehumidification apparatus 20 (t12 to t13 in FIG. 3, t22 to t23 in FIG. 4, and t32 to t33 in FIG. 5), the hydrogen gas produced by the hydrogen production apparatus 10 is guided to the dehumidification apparatus 20 via the gas-liquid separator 14 to be dehumidified, and the dehumidified hydrogen gas is discharged from the dehumidification apparatus 20 through the discharge line 28. At this time, the discharge valve 29 disposed in the discharge line 28 is open. During the normal operation of the dehumidification apparatus 20, the inlet valve 36 and the outlet valve 38 of the dew point measurement line 32 are open, so that a part of the hydrogen gas flowing through the discharge line 28 is guided to the dew point measurement line 32, and the dew point of the hydrogen gas is measured by the dew point meter 34. The hydrogen gas flowing through the dew point measurement line 32 and having passed through the dew point meter 34 and the outlet valve 38 is released to the atmosphere.

In some embodiments, when the operation of the dehumidifier 22 is stopped, such as when the hydrogen production apparatus 10 is stopped, the discharging of the hydrogen gas (dehumidified hydrogen gas) from the dehumidifier 22 to the discharge line 28 is stopped (stopping step; t15 in FIG. 3, t23 in FIG. 4, and t33 in FIG. 5). In the stopping step, by closing the discharge valve 29 disposed in the discharge line 28, the discharging of the hydrogen gas from the dehumidifier 22 to the discharge line 28 is stopped.

Then, when the discharging of the hydrogen gas from the dehumidifier 22 to the discharge line 28 is stopped, a state in which the dew point meter installation part of the dew point measurement line 32 including at least the installation position of the dew point meter 34 is filled with the dry gas is maintained (maintaining step). The dry gas may be the hydrogen gas (dehumidified hydrogen gas) guided from the dehumidifier 22, or may be the dry gas supplied from the dry gas supply part 40 (see FIG. 2).

Here, the dew point meter 34 has a dew point condition (usage condition) for dehumidified hydrogen. In a state in which the dehumidified hydrogen gas does not flow through the installation position of the dew point meter 34, such as when the dehumidifier 22 is stopped, the dew point at the installation position of the dew point meter rises due to the intrusion of the atmosphere or the like, and may fall outside the range of the hydrogen usage condition. For example, in the dehumidification apparatus 20 configured such that the hydrogen gas is released to the atmosphere through the dew point measurement line 32 connected to the discharge line 28, when the dehumidifier 22 is stopped and the discharging of the hydrogen gas from the dehumidifier 22 to the discharge line 28 is stopped so that the hydrogen gas from the dehumidifier 22 no longer flows through the dew point measurement line 32, the atmosphere (wet air) enters the dew point measurement line 32, and the dew point at the dew point meter installation part may rise. Alternatively, while the dehumidifier 22 is stopped, the dew point in the dew point measurement line 32 may rise due to moisture adhering to a pipe constituting the dew point measurement line 32 or moisture contained in the pipe.

In this regard, according to the above method, since the state in which the dew point meter installation part in the dew point measurement line 32 is filled with the dry gas is maintained when the dehumidifier 22 is stopped, the dew point of the dew point meter installation part can be kept low even during the stop period of the dehumidifier 22 in which the dehumidified hydrogen gas is not discharged from the dehumidifier 22. Therefore, when restarting the dehumidifier 22, the dew point at the dew point meter installation part can be quickly brought into the range of the usage condition, and thus an appropriate dew point measurement by the dew point meter 34 can be promptly started.

In some embodiments, when the operation of the dehumidifier 22 is restarted (at the time of restarting; t10 in FIG. 3, t20 in FIG. 4, t30 in FIG. 5), the operation of the dehumidifier 22 is restarted in a state in which the dew point meter installation part of the dew point measurement line 32 is filled with the dry gas by performing the above-described maintaining step. In other words, when the operation of the dehumidifier 22 is restarted (at the time of restarting), the discharging of the hydrogen gas (dehumidified hydrogen gas) from the dehumidifier 22 to the discharge line is restarted in a state in which the dew point meter installation part of the dew point measurement line 32 is filled with the dry gas.

In the embodiments described below, when the operation of the dehumidifier 22 is restarted (at the time of restarting), the discharge valve 29 disposed in the discharge line 28 is opened (t10 in FIG. 3, t20 in FIG. 4, t30 in FIG. 5), and then the inlet valve 36 and/or the outlet valve 38 are opened (t11, t12 in FIG. 3, t21, t22 in FIG. 4, t32 in FIG. 5), but the order of opening and closing the valves is not limited thereto. For example, simultaneously with opening the discharge valve 29, the inlet valve 36 and/or the outlet valve 38 may be opened.

According to the above method, after the dehumidifier 22 is stopped, the discharging of the hydrogen gas from the dehumidifier 22 to the discharge line 28 is restarted (i.e., the dehumidifier 22 is restarted) in a state in which the dew point meter installation part of the dew point measurement line 32 is filled with the dry gas. That is, since the discharging of the hydrogen gas from the dehumidifier 22 to the discharge line 28 is restarted in a state in which the dew point of the dew point meter installation part is kept low, if the inlet valve 36 and the outlet valve 38 are opened in this state, the hydrogen gas from the dehumidifier 22 can be introduced into the dew point measurement line 32 without substantially increasing the dew point in the dew point meter installation part. Therefore, when restarting the dehumidifier 22, an appropriate dew point measurement by the dew point meter 34 can be promptly started.

Hereinafter, the operation method for the dehumidification apparatus 20 according to some embodiments will be described more specifically with reference to FIGs. 1 to 5.

In some embodiments, in the above-described maintaining step, the state in which the dew point meter installation part of the dew point measurement line 32 is filled with the dry gas may be maintained by enclosing the dry gas in a portion 32a of the dew point measurement line 32 between the inlet valve 36 and the outlet valve 38.

For example, in the case of the dehumidification apparatus 20 shown in FIG. 1, in the above-described maintaining step, the hydrogen gas from the dehumidifier 22 can be enclosed as the dry gas in the portion 32a of the dew point measurement line 32 between the inlet valve 36 and the outlet valve 38.

The operation procedure when the dehumidification apparatus 20 is stopped in this case is, for example, as follows. First, when stopping the discharging of the hydrogen gas (dry hydrogen gas) from the dehumidifier 22 to the discharge line 28, the inlet valve 36 and the outlet valve 38 disposed in the dew point measurement line 32 are closed, so that the hydrogen gas present in the portion 32a between the inlet valve 36 and the outlet valve 38 is enclosed in this portion 32a. Then, during the stop period of the dehumidifier 22, the inlet valve 36 and the outlet valve 38 are maintained in a closed state. Here, "when stopping the discharging of the hydrogen gas from the dehumidifier 22 to the discharge line 28" means a time range including before and after the time (t15 in FIG. 3, t23 in FIG. 4, t33 in FIG. 5) of closing the discharge valve 29 disposed in the discharge line 28.

More specifically, for example, the following may be performed. As shown in FIG. 3, first, in a state where the hydrogen gas (dehumidified hydrogen gas) is being discharged from the dehumidifier 22 to the discharge line 28 and the hydrogen gas from the dehumidifier 22 is flowing through the dew point measurement line 32, the outlet valve 38 is closed (t13 in FIG. 3), and then the inlet valve 36 is closed (t14 in FIG. 3; inlet valve closing step). As a result, the hydrogen gas (dry gas) from the dehumidifier 22 is enclosed in the portion 32a of the dew point measurement line 32. After that, the discharge valve 29 is closed to stop the discharging of the hydrogen gas from the dehumidifier 22 to the discharge line 28 (t15; stopping step). During the stop of the dehumidification apparatus 20 (after t15 or the period until t10 in FIG. 3), the inlet valve 36 and the outlet valve 38 are maintained in a closed state, and the state in which the hydrogen gas is enclosed in the portion 32a of the dew point measurement line 32 is maintained (maintaining step). As long as the hydrogen gas can be enclosed in the portion 32a between the inlet valve 36 and the outlet valve 38, the order in which the discharge valve 29, the inlet valve 36, and the outlet valve 38 are opened and closed does not have to be exactly as described above. For example, the hydrogen gas can also be enclosed in the portion 32a between the inlet valve 36 and the outlet valve 38 by closing the inlet valve 36 and the outlet valve 38 immediately after closing the discharge valve 29.

Further, for example, in the case of the dehumidification apparatus 20 shown in FIG. 2, in the above-described maintaining step, the dry gas (hydrogen gas, or an inert gas such as nitrogen or argon) supplied through the supply line 44 can be enclosed in the portion 32a of the dew point measurement line 32 between the inlet valve 36 and the outlet valve 38.

The operation procedure when the dehumidification apparatus 20 is stopped in this case is, for example, as follows. As illustrated in FIG. 4, the inlet valve 36 of the dew point measurement line 32 is closed (t24 in FIG. 4; inlet valve closing step) to shut off the inflow of the hydrogen gas from the discharge line 28 to the dew point measurement line 32. At this time, the outlet valve 38 is in an open state. In FIG. 4, the discharge valve 29 is closed at time t23 to stop the discharging of the hydrogen gas from the dehumidifier 22 to the discharge line 28 (stopping step), and then the inlet valve 36 of the dew point measurement line 32 is closed; however, the discharge valve 29 may be closed after the inlet valve 36 is closed. Thereafter, the supply valve 46 is opened in a state in which the inlet valve 36 is closed and the outlet valve 38 is opened (t25 in FIG. 4), and the dry gas is supplied through the supply line 44 to the portion 32a of the dew point measurement line 32 between the inlet valve 36 and the outlet valve 38. By closing the outlet valve 38 (t26 in FIG. 4), the dry gas from the dry gas supply part 40 is enclosed in the portion 32a of the dew point measurement line 32. By closing the supply valve 46 after closing the outlet valve 38 at time t26, the supply of the dry gas to the portion 32a of the dew point measurement line 32 through the supply line 44 is stopped (t27 in FIG. 4). After that, during the stop of the dehumidification apparatus 20 (after t27 or the period until t20 in FIG. 4), the inlet valve 36 and the outlet valve 38 are maintained in a closed state, and the state in which the dry gas is enclosed in the portion 32a of the dew point measurement line 32 is maintained (maintaining step).

As long as the dry gas can be enclosed in the portion 32a between the inlet valve 36 and the outlet valve 38, the order in which the discharge valve 29, the inlet valve 36, the outlet valve 38, and the supply valve 46 are opened and closed does not have to be exactly as described above. For example, the dry gas can also be enclosed in the portion 32a between the inlet valve 36 and the outlet valve 38 by closing the inlet valve 36 and simultaneously opening the supply valve 46 immediately after closing the discharge valve 29.

As described above, in the case where the dry gas (the hydrogen gas from the dehumidifier 22 or the dry gas from the dry gas supply part 40) is enclosed in the portion 32a of the dew point measurement line 32, the operation can be performed, for example, in the following procedure to restart the dehumidifier 22. First, the discharge valve 29 is opened to restart the discharging of the hydrogen gas from the dehumidifier 22 to the discharge line 28 (t10 in FIG. 3, t20 in FIG. 4), and then the inlet valve 36 and the outlet valve 38 are opened in this order (t11 to t12 in FIG. 3, t21 to t22 in FIG. 4), whereby a part of the hydrogen gas from the dehumidifier 22 begins to flow through the dew point measurement line 32, and the measurement of the dew point of the hydrogen gas by the dew point meter 34 can be restarted. In the procedure for restarting the dehumidifier, the order of opening and closing the discharge valve 29, the inlet valve 36, the outlet valve 38, and/or the supply valve 46 may not be as described above.

With the method according to the above-described embodiment, during the stop period of the dehumidifier 22, it is possible to maintain a state in which the dry gas (the hydrogen gas from the dehumidifier 22 or the dry gas from the dry gas supply part 40) is enclosed in the portion 32a of the dew point measurement line 32 between the inlet valve 36 and the outlet valve 38. Accordingly, since the dew point at the dew point meter installation part can be maintained low during the stop period of the dehumidifier 22, the dew point at the dew point meter installation part can be quickly brought into the range of the usage condition when restarting the dehumidifier 22. Therefore, when restarting the dehumidifier 22, an appropriate dew point measurement by the dew point meter 34 can be promptly started.

In some embodiments, in the above-described maintaining step, the state in which the dew point meter installation part of the dew point measurement line 32 is filled with the dry gas may be maintained by continuously supplying the dry gas (the hydrogen gas or the inert gas from the dry gas supply part 40) into the portion 32a of the dew point measurement line 32 between the inlet valve 36 and the outlet valve 38.

For example, in the case of the dehumidification apparatus 20 shown in FIG. 2, in the above-described maintaining step, the dry gas can be continuously supplied to the portion 32a of the dew point measurement line 32 by continuously supplying the dry gas to the dew point measurement line 32 through the supply line 44, with the inlet valve 36 of the dew point measurement line 32 closed and the outlet valve 38 open.

The operation procedure when the dehumidification apparatus 20 is stopped in this case is, for example, as follows. As illustrated in FIG. 5, the inlet valve 36 of the dew point measurement line 32 is closed (t34 in FIG. 5; inlet valve closing step) to shut off the inflow of the hydrogen gas from the discharge line 28 to the dew point measurement line 32. At this time, the outlet valve 38 is in an open state. In FIG. 5, the discharge valve 29 is closed at time t33 to stop the discharging of the hydrogen gas from the dehumidifier 22 to the discharge line 28 (stopping step), and then the inlet valve 36 of the dew point measurement line 32 is closed; however, the discharge valve 29 may be closed after the inlet valve 36 is closed. Alternatively, the discharge valve 29 and the inlet valve 36 may be closed simultaneously. Thereafter, the supply valve 46 is opened in a state in which the inlet valve 36 is closed and the outlet valve 38 is opened (t35 in FIG. 5), and the dry gas is supplied through the supply line 44 to the portion 32a of the dew point measurement line 32 between the inlet valve 36 and the outlet valve 38. After that, during the stop of the dehumidification apparatus 20 (after t35 or the period until t30 in FIG. 5), the dry gas is continuously supplied to the dew point measurement line 32 through the supply line 44, with the inlet valve 36 closed and the outlet valve 38 open (maintaining step).

As long as the dry gas can be continuously supplied to the portion 32a between the inlet valve 36 and the outlet valve 38, the order in which the discharge valve 29, the inlet valve 36, the outlet valve 38, and the supply valve 46 are opened and closed does not have to be exactly as described above. For example, the dry gas can also be continuously supplied to the portion 32a between the inlet valve 36 and the outlet valve 38 by closing the inlet valve 36 and simultaneously opening the supply valve 46 immediately after closing the discharge valve 29.

As described above, in the case where the dry gas (dry gas from the dry gas supply part 40) is continuously supplied to the dew point measurement line 32, the operation is performed, for example, in the following procedure to restart the dehumidifier 22. First, the discharge valve 29 is opened to restart the discharging of the hydrogen gas from the dehumidifier 22 to the discharge line 28 (t30 in FIG. 5), and then, by closing the supply valve 46 and opening the inlet valve 36 (t31 to t32 in FIG. 5), a part of the hydrogen gas from the dehumidifier 22 begins to flow through the dew point measurement line 32, and the measurement of the dew point of the hydrogen gas by the dew point meter 34 can be restarted. In the procedure for restarting the dehumidifier, the order of opening and closing the discharge valve 29, the inlet valve 36, the outlet valve 38, and/or the supply valve 46 may not be as described above.

With the method according to the above-described embodiment, during the stop period of the dehumidifier 22, the dry gas (hydrogen gas, inert gas, etc.) is continuously supplied to the dew point measurement line 32 through the supply line 44, with the inlet valve 36 closed. Thus, during the stop period of the dehumidifier 22, the dew point meter installation part of the dew point measurement line 32 can be filled with the dry gas (hydrogen gas, inert gas, etc.). Accordingly, since the dew point at the dew point meter installation part can be maintained low during the stop period of the dehumidifier 22, the dew point at the dew point meter installation part can be quickly brought into the range of the usage condition when restarting the dehumidifier 22. Therefore, when restarting the dehumidifier 22, an appropriate dew point measurement by the dew point meter can be promptly started.

In the above-described maintaining step, for example, as described with reference to FIG. 2 and FIG. 4, when enclosing the dry gas from the dry gas supply part 40 in the portion 32a of the dew point measurement line 32 between the inlet valve 36 and the outlet valve 38, the state in which the dew point meter installation part of the dew point measurement line 32 is filled with the dry gas may be maintained by operating the supply valve 46 and/or the outlet valve 38 based on a measured value of the dew point at the dew point meter 34.

Specifically, for example, after enclosing the dry gas from the dry gas supply part 40 in the portion 32a of the dew point measurement line 32 between the inlet valve 36 and the outlet valve 38 according to the procedure described above, while maintaining the state in which the dry gas is enclosed in the portion 32a of the dew point measurement line 32 (maintaining step) during the stop of the dehumidification apparatus 20 (after t27 or the period until t20 in FIG. 4), for example, the supply valve 46 and/or the outlet valve 38 can be operated in the following procedure.

In a state in which the dry gas is enclosed in the portion 32a of the dew point measurement line 32, the dew point at the dew point meter installation part is measured by the dew point meter 34. When the dew point rises and becomes larger than a first threshold, the outlet valve 38 and the supply valve 46 are opened in this order, and the dry gas is supplied to the dew point measurement line 32 through the supply line 44. Then, the dew point at the dew point meter installation part is measured by the dew point meter 34 while supplying the dry gas to the dew point measurement line 32 in this way, and when the dew point drops to a second threshold lower than the first threshold, the outlet valve 38 and the supply valve 46 are closed in this order, and the dry gas is again enclosed in the portion 32a of the dew point measurement line 32.

According to the above method, during the stop period of the dehumidifier 22, the supply valve 46 disposed in the supply line 44 and/or the outlet valve 38 are operated based on a measured value of the dew point in the portion of the dew point measurement line 32 where the dry gas (hydrogen gas or inert gas) is enclosed. Therefore, by appropriately operating the supply valve 46 and/or the outlet valve 38, the dry gas can be appropriately supplied to the dew point measurement line 32, and the dew point at the dew point meter installation part can be maintained within a desired range (in the above-described example, a range not less than the second threshold and not more than the first threshold). Accordingly, since the dew point at the dew point meter installation part can be maintained low during the stop period of the dehumidifier 22, the dew point at the dew point meter installation part can be quickly brought into the range of the usage condition when restarting the dehumidifier 22. Therefore, when restarting the dehumidifier 22, an appropriate dew point measurement by the dew point meter 34 can be promptly started.

In some embodiments, the dew point meter 34 may be a capacitance-type dew point meter.

The capacitance-type dew point meter has an advantage that it can measure the dew point with good accuracy in a wide temperature range as compared with other types of dew point meters (for example, a chilled mirror dew point meter, etc.), but has a feature that an appropriate dew point measurement is difficult in a high humidity state. In this regard, in the above-described embodiment, in the dehumidification apparatus 20 equipped with the capacitance-type dew point meter as the dew point meter 34, as already described, the dew point at the dew point meter installation part in the dew point measurement line 32 can be kept low during the stop period of the dehumidifier 22, so that the dew point at the dew point meter installation part can be quickly brought into the range of the usage condition when restarting the dehumidifier 22. Therefore, when restarting the dehumidifier 22, an appropriate dew point measurement by the dew point meter can be promptly started.

The contents described in the above embodiments would be understood as follows, for instance.
[1] An operation method for a dehumidification apparatus (20) according to at least one embodiment of the present invention is an operation method for a dehumidification apparatus for dehumidifying hydrogen gas produced by a hydrogen production apparatus (10),
   the dehumidification apparatus including:
      a dehumidifier (22) for removing moisture contained in the hydrogen gas;
      a discharge line (28) for discharging the hydrogen gas dehumidified by the dehumidifier from the dehumidifier;
      a dew point measurement line (32) connected to the discharge line;
      a dew point meter (34) disposed in the dew point measurement line;
      an inlet valve (36) disposed in the dew point measurement line at a position closer to a connection portion (30) with the discharge line than the dew point meter; and
      an outlet valve (38) disposed in the dew point measurement line at a position opposite to the inlet valve across the dew point meter,
   the operation method including:
      a stopping step of stopping discharging of the hydrogen gas from the dehumidifier to the discharge line; and
      a maintaining step of maintaining a state in which a dew point meter installation part of the dew point measurement line including at least an installation position of the dew point meter is filled with a dry gas when the discharging of the hydrogen gas from the dehumidifier to the discharge line is stopped.
   According to the above method [1], since the state in which the dew point meter installation part in the dew point measurement line is filled with the dry gas is maintained when the dehumidifier is stopped (i.e., during the stop period of the dehumidifier), the dew point of the dew point meter installation part can be kept low even during the stop period of the dehumidifier in which the dehumidified hydrogen gas is not discharged from the dehumidifier. Therefore, when restarting the dehumidifier, the dew point at the dew point meter installation part can be quickly brought into the range of the usage condition, and thus an appropriate dew point measurement by the dew point meter can be promptly started.
[2] In some embodiments, in the above method [1],
   the operation method for a dehumidification apparatus includes a step of restarting the discharging of the hydrogen gas from the dehumidifier to the discharge line in a state in which the dew point meter installation part of the dew point measurement line is filled with the dry gas.
   According to the above method [2], after the dehumidifier is stopped, the discharging of the hydrogen gas from the dehumidifier to the discharge line is restarted (i.e., the dehumidifier is restarted) in a state in which the dew point meter installation part of the dew point measurement line is filled with the dry gas. That is, since the discharging of the hydrogen gas from the dehumidifier to the discharge line is restarted in a state in which the dew point of the dew point meter installation part is kept low, if the inlet valve and the outlet valve are opened in this state, the hydrogen gas from the dehumidifier can be introduced into the dew point measurement line without substantially increasing the dew point in the dew point meter installation part. Therefore, when restarting the dehumidifier, an appropriate dew point measurement by the dew point meter can be promptly started.
[3] In some embodiments, in the above configuration [1] or [2],
   the operation method includes a step of enclosing the hydrogen gas in a portion of the dew point measurement line between the inlet valve and the outlet valve by closing the inlet valve and the outlet valve when the discharging of the hydrogen gas from the dehumidifier to the discharge line is stopped, and
   in the maintaining step, the inlet valve and the outlet valve are maintained in a closed state.
   According to the above configuration [3], when the discharging of the hydrogen gas from the dehumidifier to the discharge line is stopped at the time of stopping the dehumidifier, by closing the outlet valve and the inlet valve in a state in which the dew point meter installation part of the dew point measurement line is filled with the hydrogen gas from the dehumidifier, the hydrogen gas (the hydrogen gas dehumidified and dried by the dehumidifier) is enclosed in the portion of the dew point measurement line between the inlet valve and the outlet valve. Then, by maintaining the inlet valve and the outlet valve in the closed state after the discharging of the hydrogen gas from the dehumidifier to the discharge line is stopped, it is possible to maintain the state in which the dry hydrogen gas (dry gas) is enclosed in the portion between the inlet valve and the outlet valve during the stop period of the dehumidifier. Accordingly, since the dew point at the dew point meter installation part can be maintained low during the stop period of the dehumidifier, the dew point at the dew point meter installation part can be quickly brought into the range of the usage condition when restarting the dehumidifier. Therefore, when restarting the dehumidifier, an appropriate dew point measurement by the dew point meter can be promptly started.
[4] In some embodiments, in the above method [3],
   the operation method includes an inlet valve closing step of closing the inlet valve when the discharging of the hydrogen gas from the dehumidifier to the discharge line is stopped,
   in the inlet valve closing step, after the outlet valve is closed in a state in which the hydrogen gas is being discharged from the dehumidifier to the discharge line, the inlet valve is closed to enclose the hydrogen gas as the dry gas in the portion (32a) of the dew point measurement line between the inlet valve and the outlet valve, and
   in the stopping step, after the inlet valve closing step, the discharging of the hydrogen gas from the dehumidifier to the discharge line is stopped.
   According to the above method [4], immediately before the discharging of the hydrogen gas from the dehumidifier to the discharge line is stopped at the time of stopping the dehumidifier, by closing the outlet valve and the inlet valve in this order in a state in which the hydrogen gas from the dehumidifier flows to the dew point meter installation part of the dew point measurement line, the hydrogen gas (the hydrogen gas dehumidified and dried by the dehumidifier) is enclosed in the portion of the dew point measurement line between the inlet valve and the outlet valve. Then, by maintaining the inlet valve and the outlet valve in the closed state after the discharging of the hydrogen gas from the dehumidifier to the discharge line is stopped, it is possible to maintain the state in which the dry hydrogen gas (dry gas) is enclosed in the portion between the inlet valve and the outlet valve during the stop period of the dehumidifier. Accordingly, since the dew point at the dew point meter installation part can be maintained low during the stop period of the dehumidifier, the dew point at the dew point meter installation part can be quickly brought into the range of the usage condition when restarting the dehumidifier. Therefore, when restarting the dehumidifier, an appropriate dew point measurement by the dew point meter can be promptly started.
[5] In some embodiments, in the above method [1] or [2],
   the operation method for a dehumidification apparatus includes:
   an inlet valve closing step of closing the inlet valve when the discharging of the hydrogen gas from the dehumidifier to the discharge line is stopped; and
   a supply step of supplying hydrogen gas or an inert gas as the dry gas to the dew point measurement line through a supply line (44) connected to a region of the dew point measurement line between the inlet valve and the dew point meter, with the inlet valve closed.
   According to the above method [5], when the dehumidifier is stopped, with the inlet valve closed and the outlet valve open, the hydrogen gas or the inert gas (dry gas) is supplied to the dew point measurement line through the supply line connected to the region of the dew point measurement line between the inlet valve and the dew point meter, so that the dew point meter installation part can be filled with the hydrogen gas or the inert gas (dry gas) during the stop period of the dehumidifier. Accordingly, since the dew point at the dew point meter installation part can be maintained low during the stop period of the dehumidifier, the dew point at the dew point meter installation part can be quickly brought into the range of the usage condition when restarting the dehumidifier. Therefore, when restarting the dehumidifier, an appropriate dew point measurement by the dew point meter can be promptly started.
[6] In some embodiments, in the above method [5],
   in the maintaining step, the dry gas is continuously supplied to the dew point measurement line through the supply line, with the inlet valve closed and the outlet valve open.
   According to the above method [6], since the hydrogen gas or the inert gas (dry gas) is continuously supplied to the dew point measurement line through the supply line with the inlet valve closed and the outlet valve open during the stop period of the dehumidifier, the dew point meter installation part can be filled with the hydrogen gas or the inert gas (dry gas) during the stop period of the dehumidifier. Accordingly, since the dew point at the dew point meter installation part can be maintained low during the stop period of the dehumidifier, the dew point at the dew point meter installation part can be quickly brought into the range of the usage condition when restarting the dehumidifier. Therefore, when restarting the dehumidifier, an appropriate dew point measurement by the dew point meter can be promptly started.
[7] In some embodiments, in the above method [5],
   the operation method for a dehumidification apparatus includes a step of enclosing the dry gas in a portion of the dew point measurement line between the inlet valve and the outlet valve by closing the outlet valve in a state in which the dew point measurement line is filled with the dry gas from the supply line, and
   in the maintaining step, the inlet valve and the outlet valve are maintained in a closed state.
   According to the above method [7], the hydrogen gas or the inert gas is enclosed in the portion between the inlet valve and the outlet valve by closing the outlet valve in a state in which the dew point measurement line is filled with the hydrogen gas or the inert gas (dry gas) from the supply line, and the inlet valve and the outlet valve are maintained in the closed state. Therefore, during the stop period of the dehumidifier, it is possible to maintain the state in which the hydrogen gas or the inert gas (dry gas) is enclosed in the portion of the dew point measurement line between the inlet valve and the outlet valve. Furthermore, in order to maintain the state in which the dry gas is filled in the portion of the dew point measurement line between the inlet valve and the outlet valve, there is no need to continuously supply the hydrogen gas or the inert gas through the supply line, so that the hydrogen gas or the inert gas can be saved. Accordingly, since the dew point at the dew point meter installation part can be maintained low during the stop period of the dehumidifier, the dew point at the dew point meter installation part can be quickly brought into the range of the usage condition when restarting the dehumidifier. Therefore, when restarting the dehumidifier, an appropriate dew point measurement by the dew point meter can be promptly started.
[8] In some embodiments, in the above method [7],
   the operation method for a dehumidification apparatus includes a step of measuring a dew point of the dry gas present in the portion of the dew point measurement line using the dew point meter, and
   in the maintaining step, a supply valve (46) disposed in the supply line is operated based on a measured value of the dew point while maintaining the inlet valve and the outlet valve in a closed state.
   According to the above method [8], during the stop period of the dehumidifier, the supply valve disposed in the supply line is operated based on a measured value of the dew point in the portion of the dew point measurement line where the hydrogen gas or the inert gas (dry gas) is enclosed. Therefore, by appropriately operating the supply valve, the dry gas can be appropriately supplied to the dew point measurement line, and the dew point at the dew point meter installation part can be maintained within a desired range. Accordingly, since the dew point at the dew point meter installation part can be maintained low during the stop period of the dehumidifier, the dew point at the dew point meter installation part can be quickly brought into the range of the usage condition when restarting the dehumidifier. Therefore, when restarting the dehumidifier, an appropriate dew point measurement by the dew point meter can be promptly started.
[9] In some embodiments, in any one of the above methods [1] to [8],
   the dew point meter is a capacitance-type dew point meter.
   The capacitance-type dew point meter has an advantage that it can measure the dew point with good accuracy in a wide temperature range as compared with other types of dew point meters (for example, a chilled mirror dew point meter, etc.), but has a feature that an appropriate dew point measurement is difficult in a high humidity state. In this regard, according to the above method [9], in the dehumidification apparatus equipped with the capacitance-type dew point meter, as described in [1], the dew point of the dew point meter installation part in the dew point measurement line can be kept low during the stop period of the dehumidifier, so that the dew point at the dew point meter installation part can be quickly brought into the range of the usage condition when restarting the dehumidifier. Therefore, when restarting the dehumidifier, an appropriate dew point measurement by the dew point meter can be promptly started.
[10] A control device (50) for a dehumidification apparatus according to at least one embodiment of the present invention is a control device for controlling an operation of a dehumidification apparatus (20) for dehumidifying hydrogen gas produced by a hydrogen production apparatus (10),
   the dehumidification apparatus including:
      a dehumidifier (22) for removing moisture contained in the hydrogen gas;
      a discharge line (28) for discharging the hydrogen gas dehumidified by the dehumidifier from the dehumidifier;
      a dew point measurement line (32) connected to the discharge line;
      a dew point meter (34) disposed in the dew point measurement line;
      an inlet valve (36) disposed in the dew point measurement line at a position closer to a connection portion (30) with the discharge line than the dew point meter; and
      an outlet valve (38) disposed in the dew point measurement line at a position opposite to the inlet valve across the dew point meter,
   in which the control device is configured to operate opening and closing of the inlet valve or the outlet valve such that a state in which a dew point meter installation part of the dew point measurement line including at least an installation position of the dew point meter is filled with a dry gas is maintained when discharging of the hydrogen gas from the dehumidifier to the discharge line is stopped.
   According to the above configuration [10], since the state in which the dew point meter installation part in the dew point measurement line is filled with the dry gas is maintained when the dehumidifier is stopped, the dew point of the dew point meter installation part can be kept low even during the stop period of the dehumidifier in which the dehumidified hydrogen is not discharged from the dehumidifier. Therefore, when restarting the dehumidifier, the dew point at the dew point meter installation part can be quickly brought into the range of the usage condition, and thus an appropriate dew point measurement by the dew point meter can be promptly started.
[11] A dehumidification apparatus (20) according to at least one embodiment of the present invention is a dehumidification apparatus for dehumidifying hydrogen gas produced by a hydrogen production apparatus (10), including:
   a dehumidifier (22) for removing moisture contained in the hydrogen gas;
   a discharge line (28) for discharging the hydrogen gas dehumidified by the dehumidifier from the dehumidifier;
   a dew point measurement line (32) connected to the discharge line;
   a dew point meter (34) disposed in the dew point measurement line;
   an inlet valve (36) disposed in the dew point measurement line at a position closer to a connection portion (30) with the discharge line than the dew point meter; and
   an outlet valve (38) disposed in the dew point measurement line at a position opposite to the inlet valve across the dew point meter,
   in which the dehumidification apparatus is configured such that the hydrogen gas having passed through the outlet valve in the dew point measurement line is released to an atmosphere.
   As in [11], in the dehumidification apparatus configured such that the hydrogen gas is released to the atmosphere through the dew point measurement line connected to the discharge line, when the dehumidifier is stopped and the hydrogen from the dehumidifier no longer flows through the dew point measurement line, the atmosphere (wet air) enters the dew point measurement line, and the dew point at the dew point meter installation part may rise. In this regard, according to the above configuration [11], since the inlet valve and the outlet valve are provided on both sides of the dew point meter in the dew point measurement line, when the dehumidifier is stopped, by appropriately operating the inlet valve and the outlet valve to open or close, it is possible to maintain the state in which the dew point meter installation part in the dew point measurement line is filled with the dry gas. Therefore, the dew point of the dew point meter installation part can be kept low even during the stop period of the dehumidifier in which the dehumidified hydrogen is not discharged from the dehumidifier. Therefore, when restarting the dehumidifier, the dew point at the dew point meter installation part can be quickly brought into the range of the usage condition, and thus an appropriate dew point measurement by the dew point meter can be promptly started.
[12] Hydrogen production equipment (1) according to at least one embodiment of the present invention includes:
   a hydrogen production apparatus (10); and
   the dehumidification apparatus (20) described in the above [11] configured to dehumidify hydrogen gas produced by the hydrogen production apparatus.

According to the above configuration [12], since the inlet valve and the outlet valve are provided on both sides of the dew point meter in the dew point measurement line, when the dehumidifier is stopped, by appropriately operating the inlet valve and the outlet valve to open or close, it is possible to maintain the state in which the dew point meter installation part in the dew point measurement line is filled with the dry gas. Therefore, the dew point of the dew point meter installation part can be kept low even during the stop period of the dehumidifier in which the dehumidified hydrogen is not discharged from the dehumidifier. Therefore, when restarting the dehumidifier, the dew point at the dew point meter installation part can be quickly brought into the range of the usage condition, and thus an appropriate dew point measurement by the dew point meter can be promptly started.

Embodiments of the present invention were described in detail above, but the present invention is not limited thereto, and various amendments and modifications may be implemented.

In the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", and "have" are not intended to be exclusive of other components.

### Reference Signs List

- 1: Hydrogen production equipment
- 10: Hydrogen production apparatus
- 12: Water electrolysis apparatus
- 14: Gas-liquid separator
- 16: Hydrogen line
- 20: Dehumidification apparatus
- 22: Dehumidifier
- 24: Introduction line
- 25: Introduction valve
- 26: Vent line
- 27: Vent valve
- 28: Discharge line
- 29: Discharge valve
- 30: Connection portion
- 32: Dew point measurement line
- 32a: Portion
- 34: Dew point meter
- 36: Inlet valve
- 38: Outlet valve
- 40: Dry gas supply part
- 42: Dry gas storage part
- 44: Supply line
- 46: Supply valve
- 50: Control device

## Claims

1. An operation method for a dehumidification apparatus for dehumidifying hydrogen gas produced by a hydrogen production apparatus,
the dehumidification apparatus including:
a dehumidifier for removing moisture contained in the hydrogen gas;
a discharge line for discharging the hydrogen gas dehumidified by the dehumidifier from the dehumidifier;
a dew point measurement line connected to the discharge line;
a dew point meter disposed in the dew point measurement line;
an inlet valve disposed in the dew point measurement line at a position closer to a connection portion with the discharge line than the dew point meter; and
an outlet valve disposed in the dew point measurement line at a position opposite to the inlet valve across the dew point meter,
the operation method comprising:
a stopping step of stopping discharging of the hydrogen gas from the dehumidifier to the discharge line; and
a maintaining step of maintaining a state in which a dew point meter installation part of the dew point measurement line including at least an installation position of the dew point meter is filled with a dry gas when the discharging of the hydrogen gas from the dehumidifier to the discharge line is stopped.

2. The operation method for a dehumidification apparatus according to claim 1, comprising a step of restarting the discharging of the hydrogen gas from the dehumidifier to the discharge line in a state in which the dew point meter installation part of the dew point measurement line is filled with the dry gas.

3. The operation method for a dehumidification apparatus according to claim 1 or 2, comprising a step of enclosing the hydrogen gas in a portion of the dew point measurement line between the inlet valve and the outlet valve by closing the inlet valve and the outlet valve when the discharging of the hydrogen gas from the dehumidifier to the discharge line is stopped,
wherein in the maintaining step, the inlet valve and the outlet valve are maintained in a closed state.

4. The operation method for a dehumidification apparatus according to claim 3, comprising an inlet valve closing step of closing the inlet valve when the discharging of the hydrogen gas from the dehumidifier to the discharge line is stopped,
wherein in the inlet valve closing step, after the outlet valve is closed in a state in which the hydrogen gas is being discharged from the dehumidifier to the discharge line, the inlet valve is closed to enclose the hydrogen gas as the dry gas in the portion of the dew point measurement line between the inlet valve and the outlet valve, and
wherein in the stopping step, after the inlet valve closing step, the discharging of the hydrogen gas from the dehumidifier to the discharge line is stopped.

5. The operation method for a dehumidification apparatus according to claim 1 or 2, comprising:
an inlet valve closing step of closing the inlet valve when the discharging of the hydrogen gas from the dehumidifier to the discharge line is stopped; and
a supply step of supplying hydrogen gas or an inert gas as the dry gas to the dew point measurement line through a supply line connected to a region of the dew point measurement line between the inlet valve and the dew point meter, with the inlet valve closed.

6. The operation method for a dehumidification apparatus according to claim 5, wherein in the maintaining step, the dry gas is continuously supplied to the dew point measurement line through the supply line, with the inlet valve closed and the outlet valve open.

7. The operation method for a dehumidification apparatus according to claim 5, comprising a step of enclosing the dry gas in a portion of the dew point measurement line between the inlet valve and the outlet valve by closing the outlet valve in a state in which the dew point measurement line is filled with the dry gas from the supply line,
wherein in the maintaining step, the inlet valve and the outlet valve are maintained in a closed state.

8. The operation method for a dehumidification apparatus according to claim 7, comprising a step of measuring a dew point of the dry gas present in the portion of the dew point measurement line using the dew point meter,
wherein in the maintaining step, a supply valve disposed in the supply line is operated based on a measured value of the dew point while maintaining the inlet valve and the outlet valve in a closed state.

9. The operation method for a dehumidification apparatus according to claim 1 or 2,
wherein the dew point meter is a capacitance-type dew point meter.

10. A control device for controlling an operation of a dehumidification apparatus for dehumidifying hydrogen gas produced by a hydrogen production apparatus,
the dehumidification apparatus including:
a dehumidifier for removing moisture contained in the hydrogen gas;
a discharge line for discharging the hydrogen gas dehumidified by the dehumidifier from the dehumidifier;
a dew point measurement line connected to the discharge line;
a dew point meter disposed in the dew point measurement line;
an inlet valve disposed in the dew point measurement line at a position closer to a connection portion with the discharge line than the dew point meter; and
an outlet valve disposed in the dew point measurement line at a position opposite to the inlet valve across the dew point meter,
wherein the control device is configured to operate opening and closing of the inlet valve or the outlet valve such that a state in which a dew point meter installation part of the dew point measurement line including at least an installation position of the dew point meter is filled with a dry gas is maintained when discharging of the hydrogen gas from the dehumidifier to the discharge line is stopped.

11. A dehumidification apparatus for dehumidifying hydrogen gas produced by a hydrogen production apparatus, comprising:
a dehumidifier for removing moisture contained in the hydrogen gas;
a discharge line for discharging the hydrogen gas dehumidified by the dehumidifier from the dehumidifier;
a dew point measurement line connected to the discharge line;
a dew point meter disposed in the dew point measurement line;
an inlet valve disposed in the dew point measurement line at a position closer to a connection portion with the discharge line than the dew point meter; and
an outlet valve disposed in the dew point measurement line at a position opposite to the inlet valve across the dew point meter,
wherein the dehumidification apparatus is configured such that the hydrogen gas having passed through the outlet valve in the dew point measurement line is released to an atmosphere.

12. Hydrogen production equipment, comprising:
a hydrogen production apparatus; and
the dehumidification apparatus according to claim 11 configured to dehumidify hydrogen gas produced by the hydrogen production apparatus.
